Europäisches Patentamt

European Patent Office

Office européen des brevets

(11) Publication number: **0 175 016**
**B1**

# EUROPEAN PATENT SPECIFICATION

(45) Date of publication of patent specification: **22.03.89**      (51) Int. Cl.⁴: **F 16 D 27/10**

(21) Application number: **84111303.8**

(22) Date of filing: **21.09.84**

(54) **Electromagnetic clutch having high torque transfer.**

| | |
|---|---|
| (43) Date of publication of application:<br>**26.03.86 Bulletin 86/13** | (73) Proprietor: **SANDEN CORPORATION**<br>**20 Kotobuki-cho**<br>**Isesaki-shi Gunma-ken (JP)** |
| (45) Publication of the grant of the patent:<br>**22.03.89 Bulletin 89/12** | (72) Inventor: **Koitabashi, Takatoshi**<br>**90-5, Yanase**<br>**Annaka-shi Gunma-ken (JP)** |
| (84) Designated Contracting States:<br>**DE FR GB SE** | (74) Representative: **Prüfer, Lutz H., Dipl.-Phys.**<br>**Harthauser Strasse 25d**<br>**D-8000 München 90 (DE)** |
| (56) References cited:<br>**FR-A-1 101 667**<br>**FR-A-1 148 104**<br>**FR-A-2 023 460**<br>**FR-A-2 272 300**<br>**GB-A- 691 027**<br>**GB-A- 792 530**<br>**US-A-2 958 406**<br>**US-A-3 044 594**<br>**US-A-3 082 933**<br>**US-A-3 749 216** | |

Courier Press, Leamington Spa, England.

## Description

This invention relates to an electromagnetic clutch in accordance with the preamble of claim 1.

Such an electromagnetic clutch is known from the US—A—2 958 406. On one of the engaging friction surfaces a thin film is provided which prevents both friction surfaces from direct contact therebetween before a lubricant is fully extended over both friction surfaces at the initial use of the clutch, so that a welding between both friction surfaces is avoided. In this clutch neither of the friction surfaces comprises a rough surface and neither friction surface is covered by a material which can be readily shaved or worn off by the other friction surface during operation of the electromagnetic clutch.

Other electromagnetic clutches are well-known in the art and are often used for controlling the transfer of power from an automobile engine to the refrigerant compressor of the automobile's air conditioning system. The basic construction and operation of these types of clutches are also well-known in the prior art. Examples of such clutches may be found in prior U.S. Patent Nos. 3,044,594 and 3,082,933.

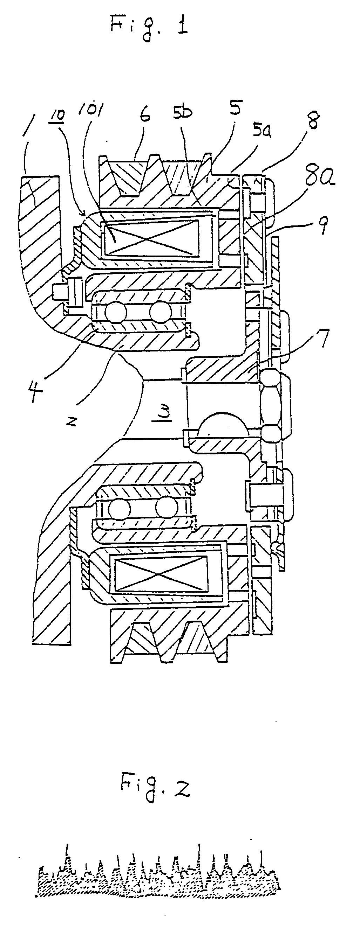

With reference to Figures 1 and 2, an electromagnetic clutch of the type known in the prior art will be described. Figure 1 is a cross-sectional view showing an electromagnetic clutch mounted on a refrigerant compressor. The clutch is disposed on the outer peripheral portion of tubular extension 2 which projects from an end surface of compressor housing 1. Tubular extension 2 surrounds drive shaft 3 of the compressor. Drive shaft 3 is rotatably supported in compressor housing 1 by bearings (not shown). The clutch assembly includes rotor 5 which is rotatably mounted on tubular extension 2 through bearing 4. Rotor 5 may be driven by an automobile engine (not shown) via belt 6. Rotor 5 is also provided with a plurality of concentric arcuate magnetic pole faces 5a at its axial end. The outer terminal end of drive shaft 3 extends from tubular extension 2 to hub 7 which is fixed on the end of drive shaft 3. Armature plate 8 is provided with concentric arcuate magnetic pole faces 8a and is flexibly joined to hub 7 by a plurality of leaf springs 9 in such a fashion that pole faces 8a are positioned facing pole faces 5a of rotor 5 with a predetermined axial air gap between them. Electromagnet 10 is mounted on compressor housing 1 concentrically with drive shaft 3. Electromagnet 10 is fixed within annular hollow portion 5b which is formed in rotor 5 and has a surrounding air gap to facilitate passage of the magnetic field generated when electromagnet 10 is activated for attracting pole faces 8a of armature plate 8 to pole faces 5a of rotor 5. Thus, when electromagnetic coil 101 of electromagnet 10 is energized, pole faces 8a are attracted to pole faces 5a. Drive shaft 3 is then rotated when rotor 5 is turned by the engine. When electromagnet coil 101 of electromagnet 10 is not energized, pole faces 8a of armature plate 8 are separated from pole faces 5a of rotor 5 due to the spring bias of leaf springs 9. Thus, rotor 5 is permitted to rotate in response to the engine output, but drive shaft 3 is not driven.

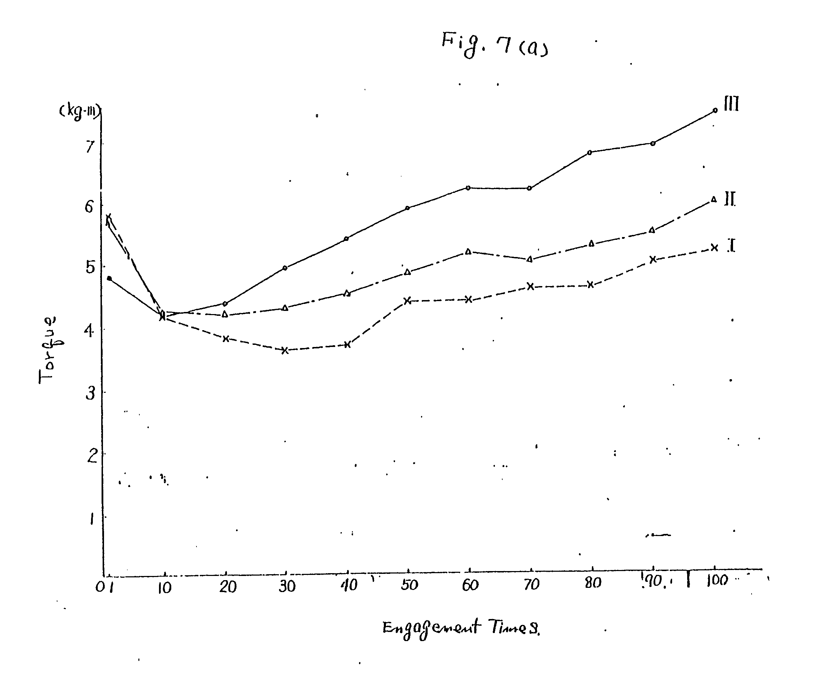

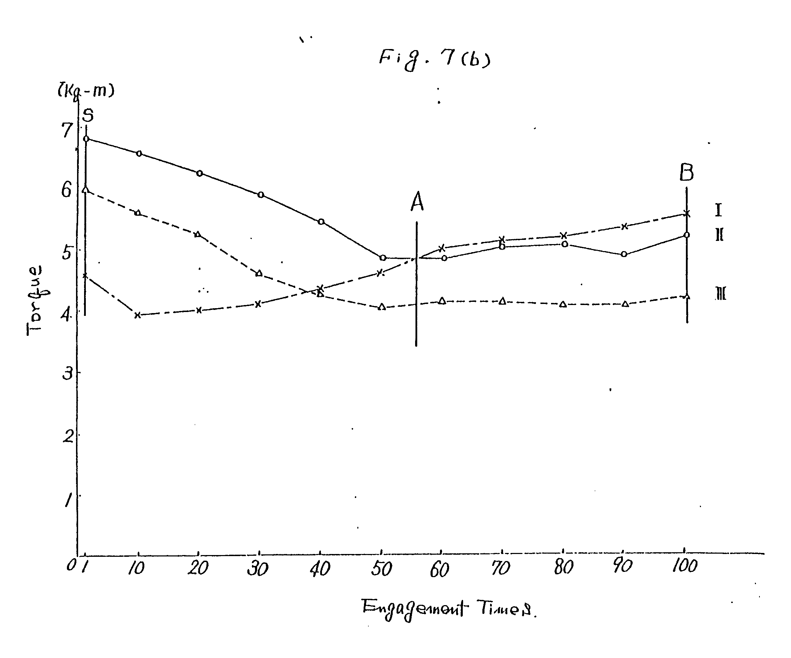

In electromagnetic clutches of the type shown in Figure 1, pole faces 5a of rotor 5 and faces 8a of armature plate 8 include a frictional surface for transmitting torque from rotor 5 to armature plate 8 when the pole faces surfaces are engaged with each another. These frictional surfaces are finished by a polishing process. Therefore, each surface has an uneven irregular face as shown in Figure 2. During the early stages of initial use of the clutch, the frictional surfaces of pole faces 5a and 8a securely engage with one another due to the roughness of each surface. Accordingly, a high level of torque is transferred. However, after the initial stages of use, the frictional surfaces suddenly begin to wear to a smoother finish, making secure engagement difficult. Accordingly, torque is no longer efficiently transferred from rotor 5 to armature plate 8. After subsequent engagements of pole faces 5a and 8a, their frictional surfaces tend to become rough again and the effiency of torque transfer gradually increases. The decrease in torque transfer during the initial stages of clutch use and the gradual increase in torque transfer after subsequent engagements of the rotor and armature plate pole faces is shown in graph form in Figures 7(a) and 7(b). Graph I in both figures illustrate this phenomenon in electromagnetic clutches known in the prior art and graphs II and III illustrate this phenomenon in the electromagnetic clutch of the present invention as will be explained below.

In order to overcome the above-described disadvantage with respect to the loss of torque transfer efficiency during the initial stages of clutch operation, particularly the sudden reduction in torque transfer, the size of the frictional surfaces in electromagnetic clutches known in the prior art have been increased to provide more engagement surface for the rotor and armature plate pole faces. In other prior art electromagnetic clutches, the size of the magnetic coil is enlarged to increase the strength of its magnetic field. Accordingly, the rotor and armature plate pole faces are forced into more secure engagement. Although increasing the size of the frictional surface and/or the size of the magnetic coil improves the efficiency of torque transfer, these measures create other problems. For example, the size and weight of the clutch is significantly increased. In addition, the cost of the clutch is increased as well. These additional problems are alleviated somewhat by attempting to limit the increase in the size of the frictional surfaces and magnetic coil by fabricating the frictional surfaces with metal having a high coefficient of friction. However, such metals are very expensive and, therefore, are not a satisfactory alternative.

It is the object of the invention to provide an electromagnetic clutch which has a high level of initial torque transfer wherein the torque transfer efficiency increases as the clutch is used.

This object is solved by an electromagnetic clutch as described initially which is characterized by the characterizing portion of claim 1.

According to the present invention, an electromagnetic clutch is disclosed which comprises a rotor and armature plate which are rotatably supported on respective bearings. The rotor is provided with at least one annular groove in an outer portion thereof for receiving a belt for rotatably connecting the rotor to an external driving source. The rotor is also provided with an axial end magnetic frictional surface. The armature plate has an annular magnetic member which is capable of limited axial movement and has an axial end frictional surface which faces the magnetic frictional surface of the rotor, with an axial gap therebetween. The electromagnetic clutch of the present invention also includes an electromagnet device associated with the rotor for attracting the armature plate into engagement with the rotor via their respective frictional surfaces.

In one embodiment of the present invention, the frictional surfaces of the rotor and armature plate are finished by a machine tool and are then treated by a plating process. The machining and plating process help to maintain a high co-efficient of friction between the frictional surfaces, thereby improving the torque transfer efficiency during the initial and subsequent stages of clutch operation.

The above described electromagnetic clutch will be described in preferred embodiments with references to the Figures. From the Figures show:

Figure 1 is a cross-sectional view of an electromagnetic clutch known in the prior art.

Figure 2 is an illustrative enlarged partial sectional view of the frictional surface layer of the rotor of the electromagnetic clutch shown in Figure 1.

Figure 3 is a cross-sectional view of an electromagnetic clutch in accordance with the present invention.

Figure 4 is an illustrative enlarged partial sectional view of the frictional surface layer of the rotor of the electromagnetic clutch shown in Figure 3.

Figure 5 is an illustrative enlarged partial sectional view of the frictional surface in accordance with another embodiment of the rotor of the electromagnetic clutch of the present invention.

Figure 6 is a cross-sectional view of an electromagnetic clutch in accordance with another embodiment of the present invention.

Figures 7a and 7b are graphs which illustrate changes in transfer torque corresponding to engagement times of the rotor and armature plate of the clutch.

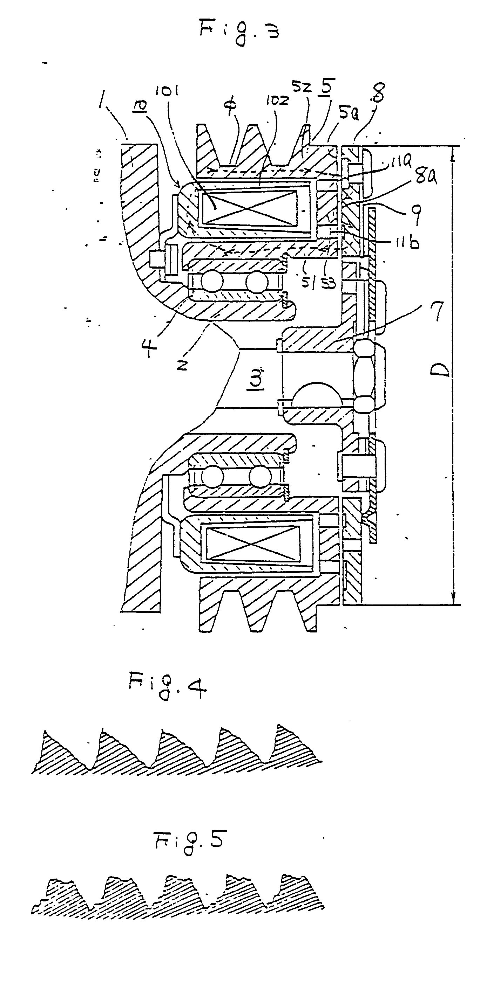

With reference to Figures 3 and 4, there is shown an embodiment of the present invention which is similar to the electromagnetic clutch shown in Figure 1 except for the construction of the rotor. Therefore, similar parts are represented by the same reference numbers as shown in Figure 1 and a detailed description of these parts is omitted.

In this embodiment of the present invention, rotor 5 is formed of an integrated body of magnetic material, such as steel, and comprises inner cylindrical portion 51, outer cylindrical portion 52 and end plate portion 53 which is connected at its axial end between both cylindrical portions 51 and 52. End plate portion 53 is provided with a plurality of concentrically arcuate slits 11a and 11b. These slits form concentric annular magnetic pole faces 5a which have a frictional surface.

The frictional surface of pole faces 5a of rotor 5 is finished by machining and is then plated. The cross-sectional configuration of the frictional surface of pole faces 5a after machining is shown in Figure 4. Note that the rough surface is uniformly formed with the terminal end of each peak having an acute shape. The frictional surface is then treated with a uniform layer of plating. The plating layer may be 5—20 microns in thickness, for example. Pole faces 8a of armature plate 8 also have a frictional surface which is finished by polishing so that its cross-sectional configuration is the same as that shown in Figure 2.

When electromagnet coil 101 is energized in the present embodiment, a magnetic field is generated with magnetic flux lines flowing through a closed loop comprising magnetic housing 102 of electromagnet 10, outer cylindrical portion 52, armature plate 8, axial end plate portion 53, armature plate 8 and inner cylindrical portion 51, as shown by a broken line in Figure 3. Therefore, armature plate 8 is attracted to axial end plate 53 and is engaged with the frictional surface of pole faces 5a of rotor 5 via the frictional surface of pole faces 8a. Thus, drive shaft 3 is rotated together with rotor 5. When rotor 5 and armature plate 8 initially engage, the plating layer of the frictional surface of pole faces 5a of rotor 5 is shaved or worn off. The shaved particles of plating accumulate in the minute depressions which exist in the frictional surface of pole faces 8a of armature plate 8 as shown in Figure 2. The large peak portions of the frictional surface of pole faces 8a of armature plate 8 are also shaved or worn off during initial engagement, with the frictional surface of pole faces 5a of rotor 5. These particles also accumulate in minute depressions in the frictional surface of pole faces 8a and adhere to the particles of plating.

The adhered particles form a material which exhibits a great shearing resistance toward the rotating motion of rotor 5. Therefore, in comparison to electromagnetic clutches known in the prior art, the torque transferred by the magnetic clutch of the present invention is greatly increased.

The above-described adhered particles begin to form after several engagements of the frictional surface of pole faces 5a of rotor 5 with the frictional surface of pole faces 8a of armature plate 8. The amount of material formed continues to increase with each subsequent engagement. Therefore, the amount of torque transferred begins to increase from the initial stage of clutch usage and continues to increase thereafter. After the adhered material is formed, the shear preventing properties of the material do not change. Therefore, even if the magnetic force which holds the rotor and armature plate in engagement is reduced, a high level of torque transfer is maintained. Therefore, after engagement of rotor 5 and armature plate 8, the operating voltage to the electromagnet can be reduced.

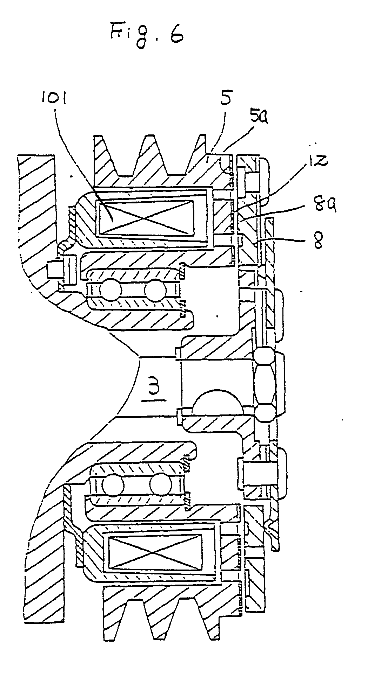

Figure 5 illustrates a modified structure of the embodiment of the invention shown in Figures 3 and 4. In this embodiment, the terminal end of each uniformly formed peak on the frictional surface of pole faces 5a is machined to a trapezoidal shape.

With reference to Figure 7a, the change in torque transfer corresponding to the number of engagements between rotor 5 and armature plate 8 is illustrated in graph form. Graph I is representative of electromagnetic clutches known in the prior art where the rotor and armature plate have the frictional surface shown in Figure 2, i.e., the frictional surface has an uneven and irregular face. During the initial stages of clutch use, great torque transfer is obtained as mentioned above. However, after the rotor and armature plate have engaged several times via their respective frictional surfaces transfer torque is suddenly reduced due to the large peak portions on the frictional surfaces being worn away. Thereafter, however, subsequent engagements of the rotor with the armature plate will result in a slight increase in torque transfer as explained above.

Graphs II and III are representative of a magnetic clutch in accordance with the embodiments of the present invention. Graph II represents the embodiment of the present invention in which the finish of the frictional surface corresponds to the finish illustrated in Figure 4, i.e., the frictional surface of pole faces 5a is machined to a rough surface uniformly formed with the terminal end of each peak having an acute shape. Graph III represents the embodiment of the present invention in which the finish of the frictional surface corresponds to the finish illustrated in Figure 5, i.e., the frictional surface of pole faces 5a is machined to a rough surface uniformly formed with the terminal end of each peak having a trapezoidal shape.

During the initial stages of use, the torque transferred by the clutch of the present invention is smaller than the torque transferred by clutches known in the prior art, as shown in Figure 7a. This situation exists because the frictional surface of the rotor and armature plate of the clutch of the present invention do not have the uneven and irregular face of prior art rotors and armature plates which provide for high initial torque transfer. However, after several engagements of the rotor with the armature plate of the present invention, the worn away metal and plating particles from the frictional surfaces adhere in minute depressions in the frictional surfaces to form a shear resistant material. Accordingly, the amount of torque transferred begins to increase, as shown in Figure 7(a), Graphs II and III. The increase is at a more rapid and sustained rate than in magnetic clutches known in the prior art.

In the embodiment of the invention having the frictional surface illustrated in Figure 5, the trapezoidal shape of the surface peaks provides increased contact surface between the rotor and armature plate frictional surfaces. Accordingly, the efficiency of torque transfer is further increased as shown by Graph III in Figure 7(a).

Referring to Figure 6, another embodiment of an electromagnetic clutch in accordance with the present invention is shown. In Figure 6, similar parts are represented by the same reference numerals as the embodiment shown in Figures 3—5. Thus, a detailed description of similar parts will be omitted in order to simplify the description. The frictional surface of pole faces 5a of rotor 5 is provided with a thin film layer 12. Film layer 12 is formed from a powder such as epoxide-silicon resin. The thickness of layer 12 can be 2—4 times the surface roughness of the frictional surface of pole faces 5a, i.e., the maximum depth of the irregular depressions. A ceramic resin powder or a magnetic material powder may also be used to form layer 12.

In this embodiment, when electromagnetic coil 101 is energized, the frictional surface of pole faces 8a of armature plate 8 is attracted to rotor 5 and is engaged with frictional surface of pole faces 5a of rotor 5. Particles of material from powder layer 12 are shaved off by the engagement and these particles embed themselves in the minute depressions which exist in the frictional surface of pole faces 8a. The large peak portions of the frictional surface of pole faces 8a are also shaved and worn during the initial engagements between rotor 5 and armature plate 8. Thus, particles from the frictional surface of pole faces 8a also aggregate in the minute depressions and adhere to the powder particles.

Referring to Figure 7b, the change in torque transfer corresponding to engagement times with rotor 5 and armature plate 8 will be explained with respect to a further embodiment of the present invention. Graph I shows the prior art clutch which was explained with reference to Figure 7A. Graph II represents a clutch which is provided with the same diameter rotor 5 as prior art clutches and graph III represents a clutch which is provided with a smaller diameter rotor 5 than prior art clutches. Rotor 5 of the clutches whose performance is illustrated in Graphs II and III includes a frictional surface of pole faces 5a in accordance with the present invention as described above. As shown in Figure 7b, the torque transferred by the clutches having a frictional surface in accordance with the present invention is increased during the initial stages of clutch use, i.e., in comparison with clutches known in the prior art, the transfer torque of graph II is increased about 60% and graph III is increased about 37%.

## Claims

1. An electromagnetic clutch comprising a first rotatable member (5) rotatably supported on a first bearing (4), said first rotatable member (5) being connected to an external driving source, said first rotatable member (5) further having an axial end magnetic frictional surface (5a) and a thin layer portion, a second rotatable member (3) rotatably supported on a second bearing, an annular magnetic member (8) being supported on said second rotatable member (3) so as to be capable of limited axial movement and having an axial end magnetic frictional surface (8a) which faces said axial end magnetic frictional surface (5a) of said first rotatable member (5) with an axial gap therebetween, and electromagnetic means (101) associated with one of said rotatable members (5) and said annular magnetic member (8) for attracting the other of said rotatable members (3), characterized in that said axial end frictional magnetic surface (5a) of said first rotatable member (5) is finished to form a rough surface with a plurality of uniformly formed peaks and valleys at the axial end surface and the thickness of the thin layer portion covering the rough surface as to correspond to the shape of peaks and valleys is 2 to 4 times the maximum depth of any irregular depressions on the frictional surface (8a) of the annular magnetic member (8), and said axial end frictional magnetic surface (8a) of the annular magnetic member (8) is formed with minute depressions, said thin layer portion being formed of material which can be readily shaved or worn off during operation of said electromagnetic clutch to form particles which accumulate in the minute depressions of the axial end frictional magnetic surface (8a), of the annular magnetic member (8), whereby the accumulation of said particles in said minute depressions increases the torque transfer of said electromagnetic clutch.

2. The electromagnetic clutch of claim 1, wherein said thin layer portion is a plated covering.

3. The electromagnetic clutch of claim 2, wherein said frictional surface having said thin layer portion is finished by a machining tool.

4. The electromagnetic clutch of claim 2, wherein at least some of said peaks formed on the frictional surface having said thin layer portion hava a trapezoidal shape.

5. The electromagnetic clutch of claim 2, wherein at least some of said peaks formed on the frictional surface having said thin layer portion have an acute shape.

6. The electromagnetic clutch of claim 2, wherein the thickness of said thin layer portion is 5 to 20 microns.

7. The electromagnetic clutch of claim 1, wherein said thin layer portion (12) is formed from a powder material.

8. The electromagnetic clutch of claim 7, wherein said powder material comprises an epoxide-silicon resin powder.

9. The electromagnetic clutch of claim 7, wherein said powder material comprises a ceramic resin powder.

10. The electromagnetic clutch of claim 7, wherein said powder material comprises a magnetic powder.

## Patentansprüche

1. Elektromagnetische Kupplung mit einem auf einem ersten Lager (4) drehbar gelagerten ersten drehbaren Teil (5), wobei das erste drehbare Teil (5) mit einer äußeren Antriebsquelle verbunden ist und wobei das erste drehbare Teil (5) darüber hinaus eine magnetische axiale Reibungsendoberfläche (5a) und einen Dünnschichtabschnitt aufweist, einem auf einem zweiten Lager drehbar gelagerten zweiten drehbaren Teil (3), wobei ein ringförmiges magnetisches Teil (8) auf dem zweiten drehbaren Teil (3) so gelagert ist, daß es zu begrenzter axialer Bewegung in der Lage ist, und wobei es eine magnetische axiale Reibungsendoberfläche (8a) aufweist, die der magnetischen axialen Reibungsendoberfläche (5a) des ersten drehbaren Teils (5) mit einem axialen Abstand dazwischen gegenüberliegt, und einer elektromagnetischen Vorrichtung (101), die einem der drehbaren Teile (5) und dem ringförmigen magnetischen Teil (8) zum Anziehen des anderen der drehbaren Teile (3) zugeordnet ist, dadurch gekennzeichnet, daß die magnetische axiale Reibungsendoberfläche (5a) des ersten drehbaren Teils (5) so bearbeitet ist, daß eine rauhe Oberfläche mit einer Mehrzahl von gleichmäßig gebildeten Spitzen und Vertiefungen an der axialen Endoberfläche gebildet ist und die Dicke des Dünnschichtabschnitts, der die rauhe Oberfläche so bedeckt, daß er der Form der Spitzen und Vertiefungen entspricht, 2 bis 4 mal so graß wie die maximale Tiefe irgendeiner unregelmässigen Einsenkung auf der Reibungsendoberfläche (8a) des ringförmigen magnetischen Teils (8) ist, und daß die magnetische axiale Reibungsendoberfläche (8a) des ringförmigen magnetischen Teils (8) mit sehr kleinen Einsenkungen gebildet ist, wobei der Dünnschichtabschnitt aus einem Material gebildet ist, das während der Betätigung der elektromagnetischen Kupplung leicht abgeschabt oder abgenutzt werden kann zum Bilden von Partikeln, die sich in den sehr kleinen Einsenkungen der magnetischen axialen Reibungsendoberfläche (8a) des ringförmigen magnetischen Teils (8) ansammeln, wodurch das Ansammeln der Partikel in den sehr kleinen Einsenkungen die Drehmomentübertragung der elektromagnetischen Kupplung erhöht.

2. Elektromagnetische Kupplung nach Anspruch 1, bei der der Dünnschichtabschnitt eine plattierte Bedeckung ist.

3. Elektromagnetische Kupplung nach Anspruch 2, bei der die Reibungsoberfläche, die den Dünnschichtabschnitt aufweist, mit einem spanabhebenden Werkzeug bearbeitet ist.

4. Elektromagnetische Kupplung nach Anspruch 2, bei der wenigstens einige der auf der den Dünnschichtabschnitt aufweisenden Reibungsoberfläche gebildeten Spitzen eine Trapezform aufweisen.

5. Elektromagnetische Kupplung nach Anspruch 2, bei der wenigstens einige der auf der den Dünnschichtabschnitt aufweisenden Reibungsoberfläche gebildeten Spitzen eine spitze Form aufweisen.

6. Elektromagnetische Kupplung nach Anspruch 2, bei der die Dicke des Dünnschichtabschnitts 5 bis 20 μm beträgt.

7. Elektromagnetische Kupplung nach Anspruch 1, bei der der Dünnschichtabschnitt (12) aus einem Pulvermaterial gebildet ist.

8. Elektromagnetische Kupplung nach Anspruch 7, bei der das Pulvermaterial ein Epoxid-Silikon-Harz-Pulver aufweist.

9. Elektromagnetische Kupplung nach Anspruch 7, bei der das Pulvermaterial ein Keramikharzpulver aufweist.

10. Elektromagnetische Kupplung nach Anspruch 7, bei der das Pulvermaterial ein magnetisches Pulver aufweist.

**Revendications**

1. Embrayage électromagnétique comprenant un premier élément rotatif (5) monté en rotation sur un premier palier de roulement (4), ce premier élément rotatif (5) étant relié à une source d'entraînement extérieure, ce premier élément rotatif (5) comportant en outre une surface de friction magnétique d'extrémité axiale (5a) et une partie de couche mince, un second élément rotatif (3) monté en rotation sur un second palier de roulement, un élément magnétique annulaire (8) monté sur le second élément rotatif (3) de manière à pouvoir effectuer un mouvement axial limité et comportant une surface de friction magnétique d'extrémité axiale (8a) qui vient en face de la surface de friction magnétique d'extrémité axiale (5a) du premier élément rotatif (5) avec un intervalle axial entre les deux, et des moyens électromagnétiques (101) associés à l'un des éléments rotatifs (5) et à l'élément magnétique annulaire (8) pour attirer l'autre élément rotatif (3), embrayage électromagnétique caractérisé en ce que la surface de friction magnétique d'extrémité axiale (5a) du premier élément rotatif (5) est usinée pour former une surface rugueuse munie d'un grand nombre de crêtes et de vallées disposées uniformément sur la surface d'extrémité axiale, en ce que l'épaisseur de la partie de couche mince couvrant la surface rugueuse de manière à correspondre à la forme des crêtes et des vallées, représente de 2 à 4 fois la profondeur maximum de n'importe qu'elle dépression irrégulière de la surface de friction (8a) de l'élément magnétique annulaire (8), et en ce que la surface de friction magnétique d'extrémité axiale (8a) de l'élément magnétique annulaire (8) est munie de dépressions minuscules, la partie de couche mince étant réalisée dans un matériau pouvant être facilement abrasé ou usé pendant le fonctionnement de l'embrayage électromagnétique pour former des particules qui s'accumulent dans les dépressions minuscules de la surface de friction magnétique d'extrémité axiale (8a) de l'élément magnétique annulaire (8), grâce à quoi l'accumulation de ces particules dans les dépressions minuscules augmente le transfert de couple de l'embrayage électromagnétique.

2. Embrayage électromagnétique selon la revendication 1, caractérisé en ce que la partie de couche mince est une couverture plaquée.

3. Embrayage électromagnétique selon la revendication 2, caractérisé en ce que la surface de friction portant la partie de couche mince est usinée par un outil d'usinage de finition.

4. Embrayage électromagnétique selon la revendication 2, caractérisé en ce que certaines au moins des crêtes formées sur la surface de friction portant la partie de couche mince, ont une forme trapézoïdale.

5. Embrayage électromagnétique selon la revendication 2, caractérisé en ce que certaines au moins des crêtes formées sur la surface de friction portant la partie de couche mince, ont une forme pointue.

6. Embrayage électromagnétique selon la revendication 2, caractérisé en ce que l'épaisseur de la partie de couche mince est de 5 à 20 micromètres.

7. Embrayage électromagnétique selon la revendication 1, caractérisé en ce que la partie de couche mince (12) est formée d'un matériau en poudre.

8. Embrayage électromagnétique selon la revendication 7, caractérisé en ce que le matériau en poudre est constitué par une poudre de résine époxy-silicium.

9. Embrayage électromagnétique selon la revendication 7, caractérisé en ce que le matériau en poudre est constitué par une poudre de résine de céramique.

10. Embrayage électromagnétique selon la revendication 7, caractérisé en ce que le matériau en poudre est constitué par une poudre magnétique.

Fig. 1

Fig. 2

Fig. 3

Fig. 4

Fig. 5

2

EP 0 175 016 B1

Fig. 6

3

Fig. 7 (a)

EP 0 175 016 B1

Fig. 7 (b)